Europäisches Patentamt

European Patent Office

Office européen des brevets

(11) Veröffentlichungsnummer: **0 076 359**
**B1**

(12) **EUROPÄISCHE PATENTSCHRIFT**

(45) Veröffentlichungstag der Patentschrift:
**18.12.85**

(51) Int. Cl.⁴: **H 02 P 7/685**

(21) Anmeldenummer: **82104119.1**

(22) Anmeldetag: **12.05.82**

(54) Antriebsvorrichtung mit zwei zur Ausschaltung der Getriebelose gegeneinander verspannten Motoren.

(30) Priorität: **14.08.81 CH 5251/81**

(43) Veröffentlichungstag der Anmeldung:
**13.04.83 Patentblatt 83/15**

(45) Bekanntmachung des Hinweises auf die Patenterteilung:
**18.12.85 Patentblatt 85/51**

(84) Benannte Vertragsstaaten:
**AT BE CH DE FR GB IT LI NL SE**

(56) Entgegenhaltungen:
**DE - A - 2 333 597**
**DE - A - 2 411 851**
**DE - A - 2 802 303**
**DE - B - 1 290 232**

(73) Patentinhaber: **CONTRAVES AG,**
**Schaffhauserstrasse 580, CH-8052 Zürich (CH)**

(72) Erfinder: **Suter, Hans–Jörg, Angelrain 525,**
**CH-8185 Winkel (CH)**
Erfinder: **Wild, Jürg, Haselsteig 17, CH-8180 Bülach (CH)**

## Beschreibung

Die Erfindung betrifft eine Antriebsvorrichtung mit zwei Doppelschlussmotoren, die über je ein Getriebe auf eine gemeinsame, um eine Achse in beiden Drehrichtungen bewegbare Last wirken und wobei die Motoren zur Ausschaltung der Getriebelose bei kleinen Summenantriebsmomenten gegeneinander, bei grossen Summenantriebsmomenten jedoch in gleicher Richtung wirken.

In Antriebssystemen führt das Spiel zwischen Motor und Last zu Instabilität und Ungenauigkeit, wenn Störungen auf die Last wirken. Bei Antrieben mit hoher Präzision müssen deshalb Massnahmen getroffen werden, um die Getriebelose auszuschalten.

So ist durch die DE-PS 1 290 232 eine Antriebsvorrichtung mit zwei Gleichstromnebenschlussmotoren mit in Serie geschalteten Ankern bekannt, die im Stillstand mit gleichen Drehmomenten einander entgegenwirken. Bei einer Beschleunigung in der Drehrichtung des einen Motors wird der Ankerstrom dieses Motors erhöht und gleichzeitig das Feld des anderen Motors geschwächt. Bei einer Antriebsvorrichtung dieser Art kann bei einer Beschleunigung nur einer der beiden Motoren wirkungsvoll eingesetzt werden, während der andere Motor zur Verspannung entgegenwirkt. Die geringe Antriebsleistung und die Energieverluste sind wesentliche Nachteile einer Antriebsvorrichtung dieser Art.

Weiter ist ein Antriebssystem mit zwei parallel geschalteten Elektromotoren mit Doppelserieerregung und Fremderregung, mit zwei kreisstromfreien 4-Quadrant-Leistungsstellgliedern mit individueller Stromregelung, einem Stellglied mit Stromregelung für die Fremderregung sowie einer analogen Steuerelektronik zur Realisierung der gewünschten Strom-Drehmoment-Kennlinie bekannt. Ein solches Antriebssystem erlaubt es, bei grossen Summenantriebsmomenten mit beiden Motoren in gleicher Richtung zu wirken. Damit kann die Antriebsleistung verbessert werden, erforderlich ist jedoch ein grosser Aufwand an Leistungselektronik, was insbesondere durch den Einbau von zwei vollständigen 4-Quadrant-Leistungsstellgliedern bedingt wird.

Es ist deshalb Aufgabe der Erfindung, eine Antriebsvorrichtung der eingangs erwähnten Art zu entwickeln, deren Leistungselektronik gegenüber dem Stand der Technik wesentlich kostengünstiger ist und ein kleineres Volumen sowie ein kleineres Gewicht aufweist.

Die Aufgabe wird dadurch gelöst, dass der durch die in Serie geschalteten Nebenschlusserregerwicklungen der beiden Doppelschlussmotoren fliessende Fremderregerstrom durch ein 2-Quadrant-Stellglied gesteuert wird, während der durch die in Serie geschalteten Anker der beiden Doppelschlussmotoren fliessende Strom durch jeweils zwei parallele Zweige der Hauptschlusserregerwicklungen in zwei Teilströme aufgeteilt wird, welche unabhängig voneinander durch zwei 2-Quadrant-Leistungsstellglieder gesteuert werden.

Die Erfindung soll nun anhand der Zeichnung näher erläutert werden.

Es zeigen:

Fig. 1 eine erfindungsgemässe Antriebsvorrichtung in schematischer Darstellung,

Fig. 2 eine Darstellung der Strom- und Drehmomentkennlinien mit Fremderregung und

Fig. 3 ein Blockschema der Antriebsregelung.

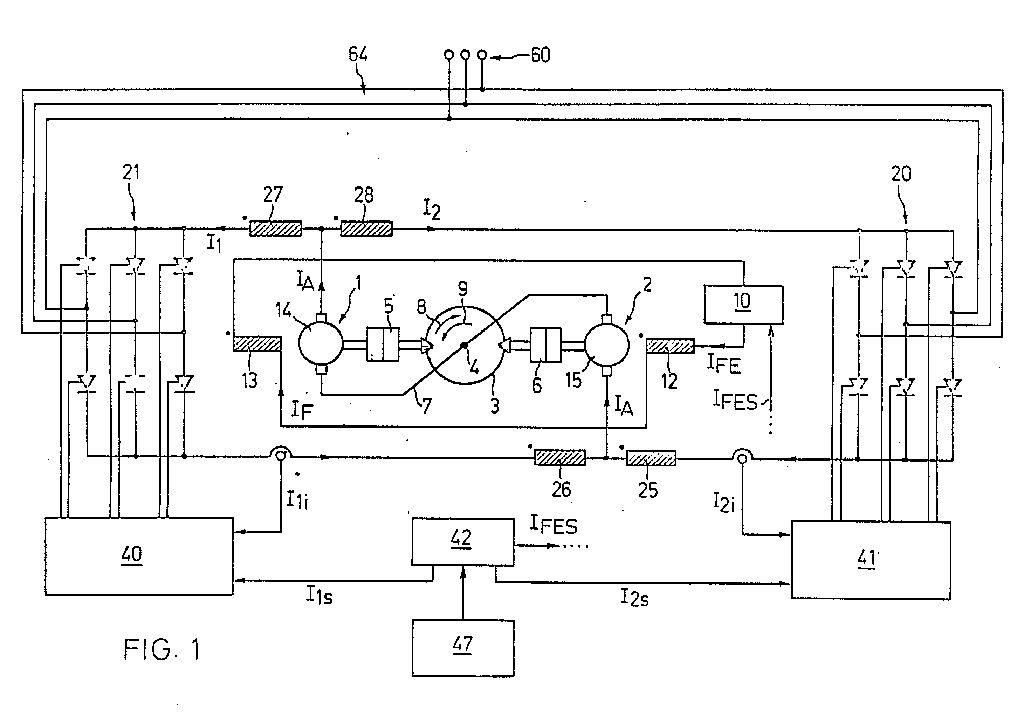

Wie Fig. 1 zeigt, ist eine Last 3 um eine Achse 4, die auch virtuell sein kann, mit Hilfe der beiden Motoren 1, 2, die über je ein Getriebe 5, 6 auf die Last 3 wirken, in beiden Drehrichtungen 8, 9 bewegbar. Die Motoren sind Kompoundmotoren, die je einen Anker 14, 15, die über die Leitung 7 elektrisch verbunden sind, je eine Nebenschlusswicklung 12, 13 und je zwei Reihen- oder Hauptschlusswicklungen 25, 26, 27, 28 aufweisen. Der Wicklungssinn der Wicklungen ist durch Punkte angedeutet.

Der Fremderregerstrom IFE durch die Nebenschlusswicklungen 12, 13 wird durch den 2-Quadrant-Leistungssteller 10 gesteuert. Die in Serie geschalteten Reihenschlusswicklungen 25, 26, 27, 28 sowie die ebenfalls in Serie geschalteten Anker 14, 15 werden über zwei 2-Quadrant-SCR-Drehstrombrücken 20, 21 gespeist. Die Serieerregerströme $I_1$, $I_2$ werden durch an sich bekannte Stromregler 40, 41 geregelt, denen aus dem Serieerregerstromkreis Stromistwerte $I_{1i}$, $I_{2i}$ und aus einer Steuerelektronik 42 zur Realisierung der gewünschten Strom-Drehmoment-Kennlinien die Stromsollwerte $I_{1s}$, $I_{2s}$ zugeführt werden. Ebenfalls wird dem 2-Quadrant-Leistungssteller 10 ein Stromsollwert $I_{FES}$ aus der Steuerelektronik 42 zugeführt.

Die elektrische Versorung der Antriebsvorrichtung erfolgt über eine dreiphasige Zuleitung 64 mit dem Netzanschluss 60. Die, verglichen mit parallel geschalteten Kompoundmotoren, doppelt so hohe Drehstrombrücken-Ausgangsspannung wird durch eine Verdoppelung der primären Netzspannung erreicht. Trotz der Erhöhung der Ausgangsspannung wird durch die Verwendung von SCR mit hoher Sperrspannung das Gewicht und das Volumen der Leistungssteller nicht erhöht, auch muss durch die Spannungserhöhung kein grösserer Energieverlust in Kauf genommen werden.

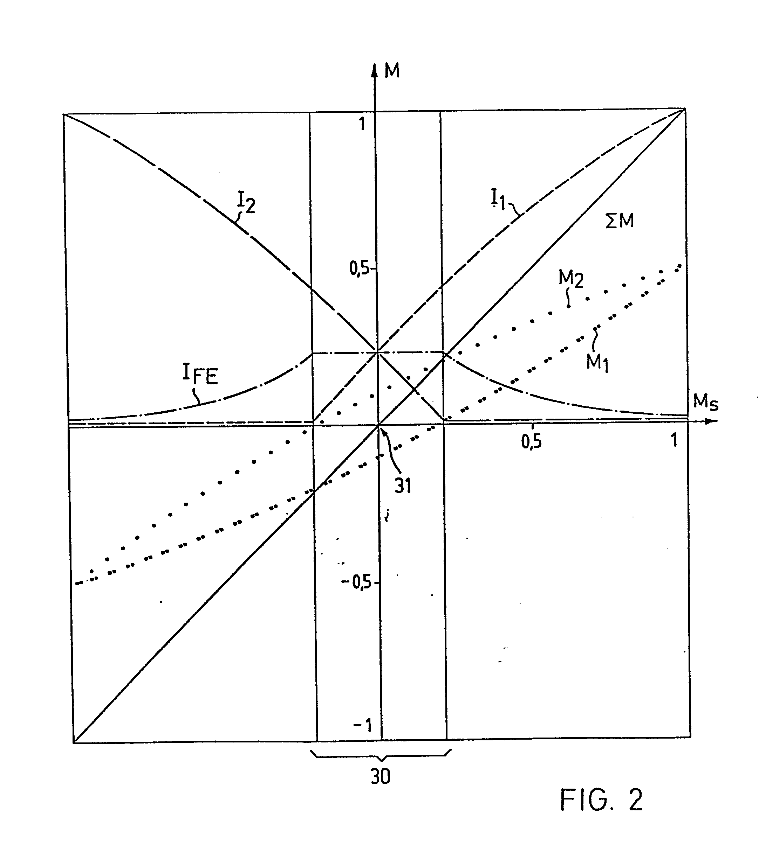

In der Fig. 2 sind die Strom- und Drehmomentkennlinien dargestellt. Auf der Abszisse ist der Summenantriebsdrehmomentsollwert $M_s$, auf der Ordinate der Summenantriebsdrehmomentistwert M, das Drehmoment $M_1$ des ersten Motors 1, das Drehmoment $M_2$ des zweiten Motors 2, der Fremderregerstrom $I_{FE}$ sowie die Serieerregerströme $I_1$ und $I_2$ dargestellt. Die Fig. 2 zeigt deutlich, wie die Motoren 1 und 2 lediglich in einem relativ engen, vorgewählten Verspannbereich 30, der im Bereich des Nullwertes 31 des Summenantriebsdrehmomentsollwertes $M_s$ liegt, verspannt sind. Bei höheren Summenantriebsdrehmomentsollwerten in beiden Richtungen sind die Motoren 1 und 2 nicht gegeneinander verspannt, was auch nicht erforderlich ist, da in diesen Bereichen kein Getriebespiel auftritt. Ebenso ist in der Darstellung ersichtlich, dass ausserhalb des Verspannbereiches 30 beide Motoren 1 und 2 in der gleichen Drehrichtung wirken.

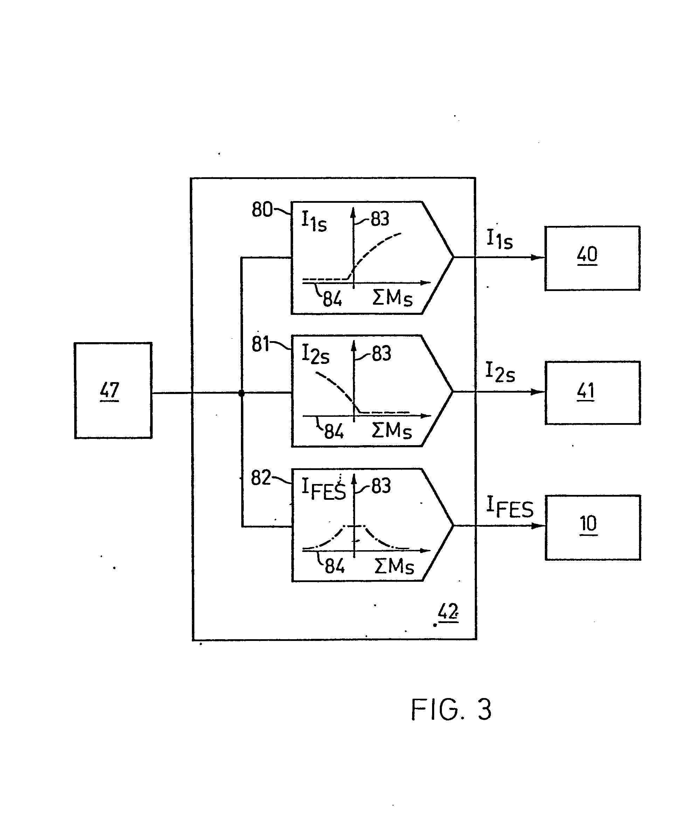

In der Fig. 3 sind in einem Blockschema der Positions- und/oder Geschwindigkeitsregler 47 sowie die Steuerelektronik 42 und in einem ersten Diagramm 80 die Kennlinie für $I_{1s}$, in einem zweiten Diagramm 81 die Kennlinie für $I_{2s}$ und in einem dritten Diagramm 82 die Kennlinie für $I_{FES}$ dargestellt. Bei allen drei Diagrammen sind auf der Ordinate 83 jeweils die Sollströme und auf der Abszisse 84 die Summenantriebsdrehmomentsollwerte $\Sigma M_s$ dargestellt, die jeweils durch den Positions- und/oder Geschwindigkeitsregler 47 vorgegeben werden. Wie das Blockschema zeigt, wird $I_{1s}$ dem Stromregler 40, $I_{2s}$ dem Stromregler 41 und $I_{FES}$ dem FE-Steller 10 zugeführt.

### Patentanspruch

Antriebsvorrichtung mit zwei Doppelschlussmotoren (1, 2), die über je ein Getriebe (5, 6) auf eine gemeinsame, um eine Achse in beiden Drehrichtungen bewegbare Last wirken und wobei die Motoren zur Ausschaltung der Getriebelose bei kleinen Summenantriebsmomenten gegeneinander, bei grossen Summenantriebsmomenten jedoch in gleicher Richtung wirken, dadurch gekennzeichnet, dass der durch die in Serie geschalteten Nebenschlusserregerwicklungen (12, 13) der beiden Doppelschlussmotoren fliessende Fremderregerstrom ($I_{FE}$) durch ein 2-Quadrant-Stellglied (10) gesteuert wird, während der durch die in Serie geschalteten Anker der beiden Doppelschlussmotoren fliessende Strom ($I_A$) durch jeweils zwei parallele Zweige (25, 26; 27, 28) der Hauptschlusserregerwicklungen in zwei Teilströme ($I_1$, $I_2$) aufgeteilt wird, welche unabhängig voneinander durch 2-Quadrant-Leistungsstellglieder (20, 21) gesteuert werden.

### Claim

Propulsion means with two compound wound motors (1, 2) which, by means of gearing (5, 6), each act on a common load (3) movable round an axis in both directions of rotation, and wherein for compensation of the backlashes, the motors act against each other in the case of small total drive moments, but in the same direction in the case of large total drive moments, characterised in that the separate exciting current ($I_{FE}$) flowing through the series-connected shunt exciting windings (12, 13) of the two compound wound motors is controlled by a 2-quadrant-regulating unit (10), whilst the current ($I_A$) flowing through the series-connected armatures of the two compound wound motors is divided respectively by two parallel branches (25, 26; 27, 28) of the series-wound exciting windings into two branch currents ($I_1$, $I_2$), which are controlled independently of each other by 2-quadrant power regulating units (20, 21).

### Revendication

Dispositif de propulsion à deux moteurs compound (1, 2) qui agissent sur une charge (3), commune, mobile dans les deux sens de rotation autour d'un axe par l'intermédiaire d'une transmission (5, 6) respective, les moteurs agissant en sens opposé au faible couple moteur totaux, pour compenser le jeu des réducteurs, en agissant toutefois dans le même sens pour les couples moteurs totaux, importants, caractérisé en ce que le courant d'excitation hétérogène ($I_{FE}$) qui passe par les enroulements d'excitation shunt, (12, 13) branchés en série des deux moteurs compound, est commandé par un dispositif de réglage à deux cadrans (10), alors que l'intensité ($I_A$) du courant passant dans les induits en série des deux moteurs compound, est réparti respectivement en deux branches parallèles (25, 26; 27, 28) des enroulements d'excitation principaux en deux intensités partielles ($I_1$, $I_2$) qui sont réglées indépendamment l'une de l'autré par des organes de réglage de puissance à deux cadrans (20, 21).

FIG. 1

FIG. 2

FIG. 3